# EUROPÄISCHE PATENTSCHRIFT

(11) **EP 2 138 743 B1**
(45) Veröffentlichungstag und Bekanntmachung des Hinweises auf die Patenterteilung: **22.12.2010**
(21) Anmeldenummer: 09159729.4
(22) Anmeldetag: 08.05.2009
(51) Int. Cl.: F16H 61/18, F16H 63/38

(54) **Schalteinrichtung mit Verriegelung**
Switching device with lock
Dispositif de commutation doté d'un verrouillage

(30) Priorität: 25.06.2008 DE 102008002635
(43) Veröffentlichungstag der Anmeldung: 30.12.2009
(73) Patentinhaber: ZF Friedrichshafen AG, 88038 Friedrichshafen (DE)
(72) Erfinder: Eisenberger, Dieter, 88693, Deggenhausertal (DE)

(56) Entgegenhaltungen:
- EP-A- 0 940 606
- DE-A1- 4 432 238
- DE-A1- 10 251 351
- DE-C1- 4 019 332

## Beschreibung

Die Erfindung betrifft eine Schalteinrichtung für ein Schaltgetriebe eines Kraftfahrzeuges mit einer Schaltwelle, über deren axiale Verschiebung einzelne Schaltschienen, denen jeweils zwei Übersetzungsverhältnisse zugeordnet sind, anwählbar sind und durch deren Rotation die jeweils gewählte Schaltschiene axial bewegbar ist, um je nach Rotationsrichtung eines der beiden zugeordneten Übersetzungsverhältnisse zu schalten, wobei einer Schaltschiene ein positives und ein negatives Übersetzungsverhältnis ohne Synchronisierungseinrichtungen zugeordnet und eine Sperrvorrichtung vorgesehen ist, um eine aufeinander folgende Schaltung zwischen diesen Übersetzungsverhältnissen zu unterbinden. So eine Schalteinrichtung ist aus der gattungsgemäßen DE 4432238A bekannt.

Schaltgetriebe von Nutzfahrzeugen weisen häufig neben den üblichen Vorwärtsgängen und einem Rückwärtsgang auch einen so genannten Kriechgang zur extremen Langsamfahrt des Fahrzeuges auf. Dieser Kriechgang wird dabei ähnlich wie der Rückwärtsgang häufig mittels einer Klauenkupplung geschaltet, die Übersetzungen für den Rückwärtgang und den Kriechgang werden beim Schalten also nicht synchronisiert. Das Rückwärtsgangrad und das Kriechgangrad auf der Hauptwelle bzw. Getriebeabtriebswelle haben gegenläufige Drehrichtungen. Des Weiteren können Rückwärtsgang und Kriechgang je nach Getriebeausführung in einer Schaltgasse gegenüberliegend angeordnet sein.

Wenn die Notwendigkeit besteht, das Fahrzeug abwechselnd vorwärts und rückwärts zu bewegen, um sich aus einer bestimmten Position heraus zu bewegen, kann es vorkommen, dass der Fahrzeugführer bei einem derartigen Aufbau des Getriebes aus Gründen der kürzeren Schaltwege direkt zwischen dem Kriechgang und dem Rückwärtsgang hin- und herschaltet. Da in diesem Fall aber entgegengesetzte Drehrichtungen vorliegen und die beiden Gänge zudem nicht synchronisiert ausgeführt sind, muss die bestehende Drehzahldifferenz, welche sich betragsmäßig aus einer Addition der Einzeldrehzahlen mit entgegengesetzter Drehrichtung zusammensetzt, über die Klauen der Klauenkupplung abgebaut werden. Dies führt dazu, dass die Klauen mit der bestehenden Drehzahldifferenz aufeinander treffen, was zu Beschädigungen oder sogar Zerstörungen führen kann. Aufgrund der heute üblichen Servounterstützung der Schaltvorgänge des Fahrzeugführers wird die Wirkkette zwischen der Muffe der Klauenkupplung und dem Fahrzeugführer unterbrochen, so dass dieser die auftretenden Schläge durch das Auftreffen der Klauen nicht mehr am Schalthebel spürt. Eine oben geschilderte Fehlbedienung des Getriebes wird somit für den Fahrzeugführer höchstens akustisch durch ein entsprechendes Geräusch im Getriebe ersichtlich. Aus diesem Grunde werden üblicherweise Mittel im Bereich der Schalteinrichtung vorgesehen, um den Fahrzeugführer auf eine Fehlbedienung hinzuweisen oder bestimmte Schaltabfolgen direkt zu unterbinden.

Aus der DE 102 51 351 A1 ist bereits eine Schalteinrichtung bekannt, bei weicher eine Schaltwelle des Schaltgetriebes eine Kontur aufweist, um bei einer Wählbewegung der Schaltwelle ein unbeabsichtigtes Eindringen in die Schaltgasse des Rückwärtsganges zu verhindern. Im Bereich der Kontur steht die Schaltwelle hierbei mit einem Rastierelement in Kontakt, welches beim Anwählen der Schaltgasse des Rückwärtsganges auf eine Abschrägung der Kontur der Schaltwelle trifft und somit der axialen Bewegung der Schaltwelle in diese Richtung einen Widerstand entgegensetzt. Erst durch eine absichtliche Überwindung dieses Widerstandes kann der Schalthebel und damit die Schaltwelle in Richtung der Schaltgasse des Rückwärtsganges verschoben werden. Somit wird der Fahrzeugführer auf die Wahl der Schaltgasse des Rückwärtsganges aufmerksam gemacht.

Aus der US 4,633,728 A1 ist eine Gangwahlsteuerung für ein Schaltgetriebe bekannt, bei welcher eine Schaltrasterplatte, weiche die Gassen und Schaltpositionen der einzelnen Gänge definiert, mit einer Rückwärtsgangsperre ausgestattet ist. Bei der Schaltrasterplatte liegen sich die höchste Übersetzungsstufe der Vorwärtsgänge und der Rückwärtsgang in einer Schaltgasse gegenüber. Die Rückwärtsgangsperre verhindert eine Fehlschaltung von dem höchsten Übersetzungsverhältnis der Vorwärtsgänge in den Rückwärtsgang, was ansonsten zu einer schweren Beschädigung oder Zerstörung von Getriebeteilen führen würde. Eine Schaltung in den Rückwärtsgang ist nur aus der Neutralstellung der benachbarten Gasse möglich. Somit wird der Fahrzeugführer vor Fehischaltungen bei einer Rückschaltung aus dem höchsten Übersetzungsverhältnis in das nächst niedrigere Übersetzungsverhältnis der Vorwärtsgänge bewährt.

Am bekannten Stand der Technik wird ein unzulässiges Hin- und Herschalten gegenüberliegender Gänge einer Gasse durch die aufgezeigten Mechanismen nicht wirksam verhindert.

Der vorliegenden Erfindung liegt daher die Aufgabe zu Grunde, eine Schalteinrichtung zu schaffen, welche bei sich gegenüberliegenden, unsynchronisierten Gängen mit entgegengesetzter Drehrichtung bei der Wahl eines dieser beiden Übersetzungsverhältnisse eine direkte Schaltung in das jeweils andere Übersetzungsverhältnis nicht zulässt.

Diese Aufgabe wird ausgehend von dem Oberbegriff des Anspruchs 1 in Verbindung mit dessen kennzeichnenden Merkmalen gelöst. Die jeweils abhängigen, untergeordneten Ansprüche geben vorteilhafte Weiterbildungen der Erfindung wieder.

Gemäß einer weiteren vorteilhaften Ausgestaltung der Erfindung liegen die Mittel der Schaltwelle in Form eines Riegelblechs vor, welches mit federkraftbelasteten Bolzen des im definierten Maße drehbaren, aber nicht axial verschiebbaren Riegelzylinders der Sperrvorrichtung beim Schalten eines der beiden, entgegengesetzten Übersetzungsverhältnisse in Eingriff kommt, um das Schalten des jeweils anderen Übersetzungsverhältnisses durch die begrenzte Rotation des Riegelzylinders zu unterbinden. In Folge dessen kann der Herstellungsaufwand reduziert werden, da die Verwendung einer Serien-Schaltwelle möglich wird, an deren einem Ende mit geeigneten Mitteln das Riegelblech befestigt wird.

In Weiterbildung der Erfindung liegen die Mittel der Schaltwelle in Form von Sperrnocken vor, während die Sperrvorrichtung das im definierten Maße drehbaren, aber axial nicht verschiebbaren Riegelzylinder mit zwei federkraftbelasten Sperrklinken aufweist, von denen eine beim Schalten eines der beiden, entgegengesetzten Übersetzungsverhältnisse mit einem Sperrnocken der Schaltwelle in Eingriff kommt, um das Schalten des jeweils anderen Übersetzungsverhältnisses durch die begrenzte Rotation des Riegelzylinders zu unterbinden. Vorteilhaft ist hierbei, dass die Sperrvorrichtung um die Schaltwelle herum angeordnet ist, was eine in axiale Richtung kompakt ausgebildete Sperrvorrichtung bewirkt und somit Bauraum spart.

Gemäß einer weiteren vorteilhaften Ausführungsform der Erfindung weist der Riegelzylinder mindestens einen Anschlagnocken auf, welcher durch seinen Bewegungsspielraum entsprechend der Größe einer Ausnehmung in einem, den Riegelzylinder umgebenden Gehäuse die Rotation des Riegelzylinders begrenzt. Dadurch kann auf einfache Art und Weise und damit mit niedrigem Herstellungsaufwand der Bewegungsspielraum des Riegelzylinders durch die Größe und Geometrie seines Anschlagnockens und der Ausnehmung in dem Gehäuse definiert werden.

In Weiterbildung der Erfindung weist der Riegelzylinder mindestens eine, sich über einen definierten Anteil seines Umfangs erstreckenden Nut auf, während ein, den Riegelzylinder umgebendes Gehäuse mindestens einen, in die mindestens eine Nut hereinragenden Stift aufweist, wobei eine Rotation des Riegelzylinders durch den Bewegungsspielraum der mindestens einen Nut gegenüber dem mindestens einen Stift begrenzt ist. Dadurch kann der Riegelzylinder als rotationssymmetrisches Bauteil ausgeführt werden, in welches nur an bestimmten Stellen und in bestimmtem Maße zur Definition des Bewegungsbereiches Nuten einzubringen sind.

Gemäß einer weiteren Ausführungsform der Erfindung ist der mindestens eine Stift im Gehäuse eingepresst. Dies hat den Vorteil, dass der Stift somit zuverlässig im Bereich des Gehäuses gehalten wird und dementsprechend den Bewegungsspielraum des Riegelzylinders begrenzt.

In Weiterbildung der Erfindung weist das Gehäuse zur Aufnahme des mindestens einen Stiftes Durchgangsbohrungen auf. Dadurch kann eine Montage des Stiftes von außerhalb des Gehäuses erfolgen.

In einer weiteren vorteilhaften Ausbildung ist der Riegelzylinder bei Verlust des Kontaktes mit der Schaltwelle durch mindestens eine Rückstellfeder in eine Ausgangsstellung zurückbewegbar. Dadurch wird gewährleistet, dass durch eine axiale Verschiebung der Schaltwelle in eine Position zur Wahl einer benachbarten Schaltschiene die Sperre aufgehoben wird und somit das jeweils andere, unsynchronisierte Übersetzungsverhältnis aus dieser Position heraus wieder schaltbar ist.

In Weiterbildung der Erfindung ist das Gehäuse zur Aufnahme der Sperrvorrichtung dreigeteilt ausgeführt. Diese vereinfacht die Montage der einzelnen Teile der Sperrvorrichtung an einem Ende der Schaltwelle.

Weitere, die Erfindung verbessernden Maßnahmen werden nachstehend gemeinsam mit der Beschreibung bevorzugter Ausführungsbeispiele anhand der Figuren näher dargestellt.

Es zeigt:
- Fig.1: eine Schnittansicht der erfindungsgemäßen Schalteinrichtung gemäß einer ersten Ausführungsform;
- Fig.2: eine weitere Schnittansicht der erfindungsgemäßen Schalteinrichtung gemäß der ersten Ausführungsform;
- Fig.3: eine Volischnittansicht der erfindungsgemäßen Schalteinrichtung gemäß der ersten Ausführungsform;
- Fig.4: eine Schnittansicht der erfindungsgemäßen Schalteinrichtung gemäß einer zweiten Ausführungsform und
- Fig.5: eine Schnittansicht der erfindungsgemäßen Schalteinrichtung gemäß der zweiten Ausführungsform in einer Schaltstellung.

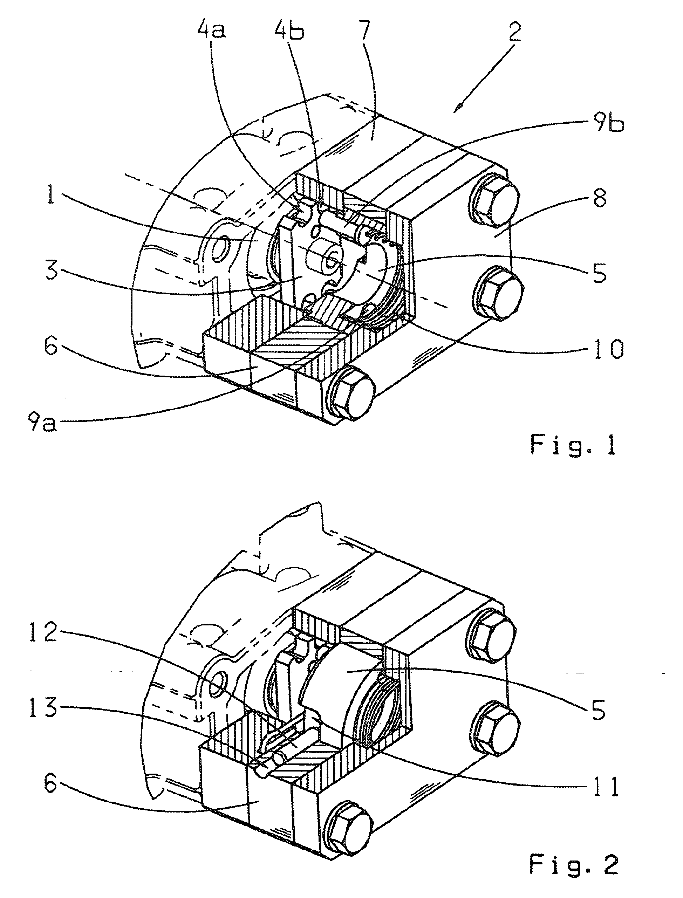

In Fig. 1 ist eine Schnittansicht der erfindungsgemäßen Schalteinrichtung gemäß einer ersten Ausführungsform zu sehen, bei welcher am Ende einer Schaltwelle 1, welche hier nur angedeutet ist, eine Sperrvorrichtung 2 angeordnet ist. Am Ende der Schaltwelle 1 ist ein Riegelblech 3 platziert, welches an einem oberen und unteren Ende jeweils zwei Aussparungen 4a und 4b aufweist. Der Stirnfläche des Riegelblechs 3 gegenüberliegend ist ein Riegelzylinder 5 angeordnet, welcher in einem mittleren Teil 6 eines hier dreiteiligen Gehäuses verdrehbar geführt ist. Zudem wird eine axiale Verschiebung des Riegelzylinders 4 in beide Richtungen durch die beiden weiteren Gehäuseteile 7 und 8 verhindert. In axialen Durchgangsbohrungen des Riegelzylinders 5 sind zudem zwei Bolzen 9a und 9b verschiebbar geführt, welche mittels einer Spiralfeder 10 in Richtung des Riegelblechs 3 vorgespannt werden.

Aus der Fig. 2 ist weiterhin ersichtlich, dass der Riegelzylinder 5 auf seinem Umfang über eine Nut 11 verfügt. In diese Nut 11 greift von radial außen ein Stift 12 ein, welcher in eine Durchgangsbohrung 13 des mittleren Gehäuseteils 6 eingepresst ist.

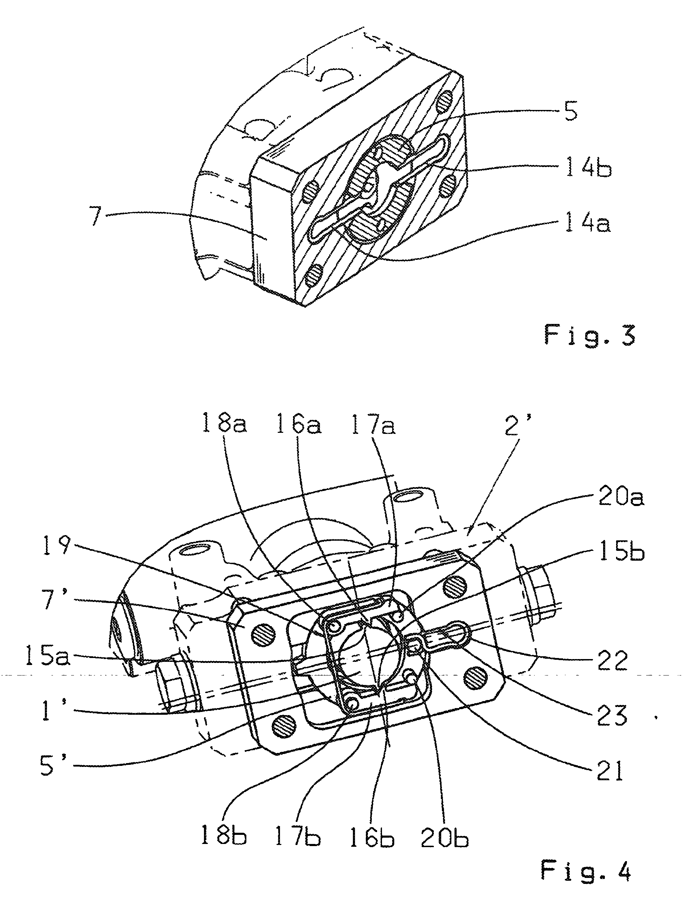

Ferner ist in Fig. 3 zu erkennen, dass der Riegelzylinder 5 an seinem der Schaltwelle 1 und Riegelblech 3 zugewandten Seite mit zwei Federelementen 14a und 14b in Kontakt steht, welche in Ausfräsungen des Gehäuseteils 7 gelagert sind und bestrebt sind, den Riegelzylinder 5 in einer Ausgangsstellung zu halten.

Zum Anwählen der Schaltgasse, in welcher sich der Rückwärtsgang und der Kriechgang befinden, wird die Schaltwelle 1 axial in Richtung der Sperrvorrichtung 2 verschoben. Dabei tritt das Riegelblech 3 mit der zwischen den Aussparungen 4a und 4b gelegenen, nockenartigen Spitze mit dem Stift 9a des Riegelzylinders 5 in Kontakt. Ein-entsprechender Kontakt findet am unteren Ende des Riegelblechs 3 auch mit dem Stift 9b statt. Die Stifte 9a und 9b werden dabei gegen die Spiralfeder 10 axial verschoben und sind gegen das Riegelblech 3 vorgespannt. Bei einer Schaltbewegung der Schaltwelle 1, also einer Verdrehung entweder in Richtung des Kriechgangs oder des Rückwärtsganges, verdreht sich auch das Riegelblech 3, wodurch der Stift 9a mit der entsprechenden Aussparung 4a oder 4b in Überdeckung kommt. Entsprechendes geschieht auch bei Stift 9b im unteren Bereich des Riegelblechs 3. Durch die Vorspannung der Spiralfeder 10 werden die Stifte 9a und 9b daraufhin in die jeweiligen Aussparungen 4a, 4b gedrückt. Bei einer Rückschaltung in neutral und damit einer entgegengesetzten Drehung der Schaltwelle 1 wird der Riegelzylinder 5 über die Stifte 9a und 9b und das Riegelblech 3 mitgedreht. Dabei liegt der Riegelzylinder 5 mit seiner Nut 11 genau am Umfang des Stiftes 12 bei einer Neutralstellung der Schaltwelle 1 an, so dass eine weitere Drehbewegung in Richtung des gegenüberliegenden Übersetzungsverhältnisses aufgrund der nicht weiter möglichen Drehung des Riegelzylinders 5 unterbunden wird. Folglich ist eine direkte Hin- und Herschaltung zwischen den beiden entgegengesetzten Übersetzungsverhältnissen nicht möglich. Erst durch eine axiale Rückbewegung der Schaltwelle 1 weg von der Sperrvorrichtung 2 verlassen die Stifte 9a und 9b die jeweiligen Aussparungen. Über die Federelemente 14a und 14b erfolgt dann eine Rückdrehung des Riegelzylinders 5 in seine Ausgangsstellung, wodurch der geschilderte Prozess von neuem gestartet werden kann und somit wieder beide Übersetzungsverhältnisse anwählbar sind.

In Fig. 4 ist eine weitere Ausführungsform der erfindungsgemäßen Schalteinrichtung zu sehen. Im Unterschied zu der vorher beschriebenen Ausführungsform weist in diesem Fall die Schaltwelle 1' zwei Sperrnocken 15a und 15b auf. Diese Sperrnocken 15a und 15b stehen mit korrespondierenden Nocken 16a und 16b zweier Sperrklinken 17a und 17b entlang ihrer flachen Flanken bei einer Neutralstellung der Schaltwelle 1' in Kontakt. Die Sperrklinken 17a und 17b sind jeweils an einem Punkt über jeweils einen Bolzen 18a und 18b am Riegelzylinder 5' drehbar geführt und werden über eine Feder 19 an jeweils einen weiteren Bolzen 20a und 20b angedrückt. Über einen Stift 21 steht der Riegelzylinder 5' zudem mit dem Federelement 22, welches in einer Aussparung 23 des Gehäuseteils 7' der Sperrvorrichtung 2' angeordnet ist, in Verbindung.

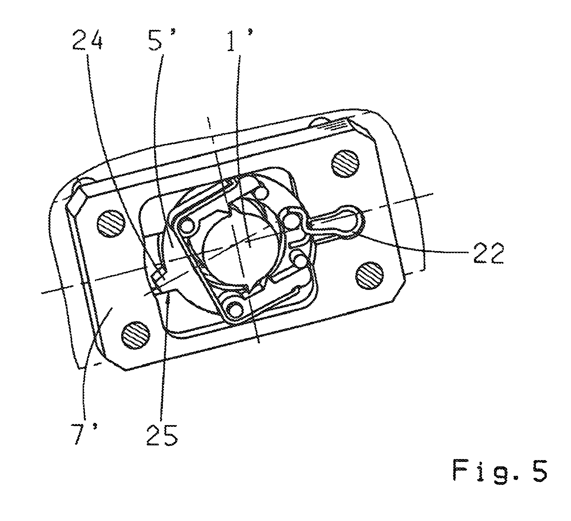

Um die Schaltgasse des Kriechgangs und des Rückwärtsganges anzuwählen, wird die Schaltwelle 1', wie auch schon im vorgenannten Ausführungsbeispiel, in Richtung des Riegelzylinders 5' bewegt. Dadurch liegen die Sperrflanken 15a und 15b und die Flanken 16a und 16b entlang ihrer flachen Erstreckung an, wie in Fig. 4 zu sehen ist. Durch eine Rotation der Schaltwelle 1' wird dann die jeweilige Sperrklinke 17a oder 17b über die Flanken des jeweiligen Sperrnockens 15a oder 15b und Nockens 16a oder 16b entgegen der Federkraft der Feder 19 angehoben, bis der jeweilige Sperrnocken 15a oder 15b hinter den Nocken 16a oder 15b hakt. Bei einer Rückschaltung in Neutral und damit Rückdrehung der Schaltwelle 1' wird über diese Hinterhakung der Riegelzylinder 5' mit bewegt, wie in Fig. 5 zu sehen ist. Dabei wird die Drehbewegung des Riegelzylinders 5' und damit der Schaltwelle 1' durch einen Anschlagnocken 24 des Riegelzylinders 5' sowie einer Ausnehmung 25 des Gehäuseteils 7' begrenzt. Dementsprechend ist erneut eine direkte Schaltung in das gegenüberliegende entgegengesetzte Übersetzungsverhältnis unmöglich. Erst durch eine axiale Rückbewegung der Schaltwelle 1' wird die Sperre gelöst und der Riegelzylinder 5' über das Federelement 22 in seine Ausgangsstellung rückbewegt.

### Bezugszeichen

- 1,1': Schaltwelle
- 2, 2': Sperrvorrichtung
- 3: Riegelblech
- 4a, 4b: Aussparungen
- 5, 5': Riegelzylinder
- 6: Gehäuseteil
- 7, 7': Gehäuseteil
- 8: Gehäuseteil
- 9a, 9b: Stifte
- 10: Spiralfeder
- 11: Umfangsnut
- 12: Stift
- 13: Durchgangsbohrung
- 14a, 14b: Federelemente
- 15a, 15b: Sperrnocken
- 16a, 16b: Nocken
- 17a, 17b: Sperrklinken
- 18a, 18b: Bolzen
- 19: Feder
- 20a, 20b: Bolzen
- 21: Stift
- 22: Federelement
- 23: Aussparung
- 24: Anschlagnocken
- 25: Ausnehmung

## Patentansprüche

1. Schalteinrichtung für ein Schaltgetriebe eines Kraftfahrzeuges mit einer Schaltwelle (1; 1'), über deren axiale Verschiebung einzelne Schaltschienen, denen jeweils Übersetzungsverhältnisse zugeordnet sind, anwählbar sind und durch deren Rotation die jeweils gewählte Schaltschiene axial bewegbar ist, um je nach Rotationsrichtung eines der zugeordneten Übersetzungsverhältnisse zu schalten, wobei einer Schaltschiene ein positives und ein negatives Übersetzungsverhältnis zugeordnet und eine Sperrvorrichtung (2; 2') vorgesehen ist, die an einem Ende der Schaltwelle (1;1') angeordnet ist, um eine aufeinander folgende Schaltung zwischen diesen Übersetzungsverhältnissen zu unterbinden, **dadurch gekennzeichnet, dass** das positive Übersetzungsverhältnis ein Kriechgang ohne Synchronisierungseinrichtung ist und das negative Übersetzungsverhältnis ein Rückwärtsgang ohne Synchronisierungseinrichtung ist, die beide in einer Schaltgasse gegenüberliegend angeordnet sind, und die Schaltwelle (1;1') an dem Ende Mittel aufweist, welche bei einer Schaltung aus dem Kriechgang in den Rückwärtsgang bzw. aus dem Rückwärtsgang in den Kriechgang mit einem im definierten Maße drehbaren, aber nicht axial verschiebbaren Riegelzylinder (5') der Sperrvorrichtung (2; 2') in Eingriff kommen und **dadurch** eine direkt darauf folgende Schaltung aus dem Rückwärtsgang in den Kriechgang bzw. aus dem Kriechgang in den Rückwärtsgang unterbinden.

2. Schalteinrichtung nach Anspruch 1, **dadurch gekennzeichnet, dass** die Mittel der Schaltwelle (1) in Form eines an der Schaltwelle (1) befestigten Riegelblechs (3) vorliegen, welches mit federkraftbelasteten Bolzen (9a, 9b) des Riegelzylinders (5) der Sperrvorrichtung (2) beim Schalten eines der beiden, entgegengesetzten Übersetzungsverhältnisse in Eingriff kommt, um das Schalten des jeweils anderen Übersetzungsverhältnisses durch die begrenzte Rotation des Riegelzylinders (5) zu unterbinden.

3. Schalteinrichtung nach Anspruch 1, **dadurch gekennzeichnet, dass** die Mittel der Schaltwelle (1') in Form von Spermocken (16a, 16b) vorliegen und der Riegelzylinder (5') der Sperrvorrichtung (2') zwei federkraftbelasteten Sperrklinken (17a, 17b) aufweist, von denen eine beim Schalten eines der beiden, entgegengesetzten Übersetzungsverhältnisse mit einem Spermocken (16a; 16b) der Schaltwelle (1') in Eingriff kommt, um das Schalten des jeweils anderen Übersetzungsverhältnisses durch die begrenzte Rotation des Riegelzylinders (5') zu unterbinden.

4. Schalteinrichtung nach Anspruch 2 oder 3, **dadurch gekennzeichnet, dass** der Riegelzylinder (5') mindestens einen Anschlagnocken (24) aufweist, welcher durch seinen Bewegungsspielraum entsprechend der Größe einer Ausnehmung (25) in einem, den Riegelzylinder (5') umgebenden Gehäuseteil (7') die Rotation des Riegelzylinders (5') begrenzt.

5. Schalteinrichtung nach Anspruch 2 oder 3, **dadurch gekennzeichnet, dass** der Riegelzylinder (5) mindestens eine, sich über einen definierten Anteil seines Umfangs erstreckende Nut (11) aufweist, während ein, den Riegelzylinder (5) umgebender Gehäuseteil (6) mindestens einen, in die mindestens eine Nut (11) hereinragenden Stift (12) aufweist, wobei eine Rotation des Riegelzylinders (5) durch den Bewegungsspielraum der mindestens einen Nut (11) gegenüber dem mindestens einen Stift (12) begrenzt ist.

6. Schalteinrichtung nach Anspruch 5, **dadurch gekennzeichnet, dass** der mindestens eine Stift (12) im Gehäuseteil (6) eingepresst ist.

7. Schalteinrichtung nach Anspruch 5 oder 6, **dadurch gekennzeichnet, dass** der Gehäuseteil (6) zur Aufnahme des mindestens einen Stiftes (12) Durchgangsbohrungen (13) aufweist.

8. Schalteinrichtung nach einem der Ansprüche 2 bis 7, **dadurch gekennzeichnet, dass** der Riegelzylinder (5; 5') bei Verlust des Kontaktes mit der Schaltwelle (1; 1') durch mindestens eine Rückstellfeder (14a, 14b; 22) in eine Ausgangsstellung zurückbewegbar ist.

9. Schaltgetriebe für ein Kraftfahrzeug, umfassend eine Schalteinrichtung nach einem der Ansprüche 1 bis 8.

## Claims

1. Shifting device for a change-speed gearbox of a motor vehicle having a shift shaft (1; 1'), via the axial displacement of which individual selector rails which are assigned in each case transmission ratios can be selected, and by the rotation of which shift shaft (1; 1') the respectively selected selector rail can be moved axially, in order to select one of the assigned transmission ratios depending on the direction of rotation, a selector rail being assigned a positive and a negative transmission ratio and a locking apparatus (2; 2') being provided which is arranged at one end of the shift shaft (1; 1'), in order to suppress a consecutive shift between the said transmission ratios, **characterized in that** the positive transmission ratio is a crawler gear without synchronizing device and the negative transmission ratio is a reverse gear without synchronizing device, which gears are both arranged in a shift gate so as to lie opposite one another, and the shift shaft (1; 1') has means at the end, which means, in the event of a shift from the crawler gear into the reverse gear or from the reverse gear into the crawler gear, come into engagement with a latching cylinder (5') of the locking apparatus (2; 2'), which latching cylinder (5') can be rotated to a defined extent but cannot be displaced axially, and as a result suppress a directly following shift from the reverse gear into the crawler gear or from the crawler gear into the reverse gear.

2. Shifting device according to Claim 1, **characterized in that** the means of the shift shaft (1) are present in the form of a locking plate (3) which is fastened to the shift shaft (1) and, during selecting of one of the two, opposed transmission ratios, comes into engagement with spring force-loaded pins (9a, 9b) of the latching cylinder (5) of the locking apparatus (2), in order to suppress the selecting of the respective other transmission ratio as a result of the restricted rotation of the latching cylinder (5).

3. Shifting device according to Claim 1, **characterized in that** the means of the shift shaft (1') are present in the form of locking cams (16a, 16b) and the latching cylinder (5') of the locking apparatus (2') has two spring force-loaded locking pawls (17a, 17b), of which one, during selecting of one of the two, opposed transmission ratios, comes into engagement with a locking cam (16a; 16b) of the shift shaft (1'), in order to suppress the selecting of the respective other transmission ratio as a result of the restricted rotation of the latching cylinder (5').

4. Shifting device according to Claim 2 or 3, **characterized in that** the latching cylinder (5') has at least one stop cam (24) which limits the rotation of the latching cylinder (5') by way of its movement play in accordance with the size of a recess (25) in a housing part (7') which surrounds the latching cylinder (5').

5. Shifting device according to Claim 2 or 3, **characterized in that** the latching cylinder (5) has at least one groove (11) which extends over a defined proportion of its circumference, whereas a housing part (6) which surrounds the latching cylinder (5) has at least one peg (12) which projects into the at least one groove (11), a rotation of the latching cylinder (5) being limited by the movement play of the at least one groove (11) with respect to the at least one peg (12).

6. Shifting device according to Claim 5, **characterized in that** the at least one peg (12) is pressed into the housing part (6).

7. Shifting device according to Claim 5 or 6, **characterized in that** the housing part (6) has through holes (13) for receiving the at least one peg (12).

8. Shifting device according to one of Claims 2 to 7, **characterized in that**, if the contact with the shift shaft (1; 1') is lost, the latching cylinder (5; 5') can be moved back into an initial position by at least one restoring spring (14a, 14b; 22).

9. Change-speed gearbox for a motor vehicle, comprising a shifting device according to one of Claims 1 to 8.

## Revendications

1. Dispositif de commutation pour une boîte de vitesses à commande manuelle d'un véhicule automobile, comprenant un arbre de commutation (1 ; 1') dont le déplacement axial permet de sélectionner des rails de commutation individuels auxquels sont associés des rapports de transmission respectifs, et dont la rotation permet de déplacer axialement le rail de commutation respectif sélectionné, afin de commuter en fonction du sens de rotation l'un des rapports de transmission associés, un rail de commutation étant associé à un rapport de transmission positif et à un rapport de transmission négatif, et un dispositif de blocage (2 ; 2') étant prévu, lequel est disposé sur une extrémité de l'arbre de commutation (1 ; 1'), afin d'inhiber une commutation successive entre ces rapports de transmission, **caractérisé en ce que** le rapport de transmission positif est une vitesse extra-lente sans dispositif de synchronisation, et le rapport de transmission négatif est une vitesse de marche arrière sans dispositif de synchronisation, qui sont tous deux disposés en regard dans une voie de commutation, et l'arbre de commutation (1 ; 1') présente à une extrémité des moyens qui, dans le cas d'une commutation de la vitesse extra-lente dans la vitesse de marche arrière ou de la vitesse de marche arrière dans la vitesse extra-lente, viennent en prise avec un cylindre de verrouillage (5') du dispositif de blocage (2 ; 2') pouvant tourner dans une mesure définie mais non déplaçable axialement, et inhibent ainsi une commutation directement successive de la vitesse de marche arrière dans la vitesse extra-lente ou de la vitesse extra-lente dans la vitesse de marche arrière.

2. Dispositif de commutation selon la revendication 1, **caractérisé en ce que** les moyens de l'arbre de commutation (1) se présentent sous forme d'une tôle de verrouillage (3) fixée sur l'arbre de commutation (1), qui vient en prise avec des boulons sollicités par une force de ressort (9a, 9b) du cylindre de verrouillage (5) du dispositif de blocage (2) lors de la commutation de l'un des deux rapports de transmission opposés, afin d'inhiber la commutation de l'autre rapport de transmission respectif par la rotation limitée du cylindre de verrouillage (5).

3. Dispositif de commutation selon la revendication 1, **caractérisé en ce que** les moyens de l'arbre de commutation (1') se présentent sous forme de cames de verrouillage (16a, 16b) et le cylindre de verrouillage (5') du dispositif de blocage (2') présente deux cliquets de verrouillage (17a, 17b) sollicités par une force de ressort, dont l'un vient en prise lors de la commutation de l'un des deux rapports de transmission opposés avec une came de verrouillage (16a ; 16b) de l'arbre de commutation (1') pour inhiber la commutation de l'autre rapport de transmission respectif par la rotation limitée du cylindre de verrouillage (5').

4. Dispositif de commutation selon la revendication 2 ou 3, **caractérisé en ce que** le cylindre de verrouillage (5') présente au moins une came de butée (24), qui, par son jeu de déplacement, en fonction de la taille d'un évidement (25) dans une partie de boîtier (7') entourant le cylindre de verrouillage (5'), limite la rotation du cylindre de verrouillage (5').

5. Dispositif de commutation selon la revendication 2 ou 3, **caractérisé en ce que** le cylindre de verrouillage (5) présente au moins une rainure (11) s'étendant sur une proportion définie de sa périphérie, tandis qu'une partie de boîtier (6) entourant le cylindre de verrouillage (5) présente au moins une goupille (12) pénétrant dans l'au moins une rainure (11), une rotation du cylindre de verrouillage (5) étant limitée par le jeu de déplacement de l'au moins une rainure (11) par rapport à l'au moins une goupille (12).

6. Dispositif de commutation selon la revendication 5, **caractérisé en ce que** l'au moins une goupille (12) est pressée dans la partie de boîtier (6).

7. Dispositif de commutation selon la revendication 5 ou 6, **caractérisé en ce que** la partie de boîtier (6) présente des alésages traversants (13) pour recevoir l'au moins une goupille (12).

8. Dispositif de commutation selon l'une quelconque des revendications 2 à 7, **caractérisé en ce que** le cylindre de verrouillage (5 ; 5'), en cas de perte de contact avec l'arbre de commutation (1 ; 1'), peut être ramené par au moins un ressort de rappel (14a, 14b ; 22) dans une position de départ.

9. Boîte de vitesses à commande manuelle pour un véhicule automobile, comprenant un dispositif de commutation selon l'une quelconque des revendications 1 à 8.
